# DEMANDE DE BREVET EUROPEEN

(11) **EP 4 759 680 A1**
(43) Date de publication de la demande: **17.06.2026**
(21) Numéro de dépôt: 25213283.2
(22) Date de dépôt: 04.11.2025
(51) Int. Cl.: B62D 25/04

(54) **DOUBLURE DE CUSTODE**

(30) Priorité: 16.12.2024 FR 2414193
(71) Demandeur: Stellantis Auto SAS, 78300 Poissy (FR)
(72) Inventeur: BESSETTE, DAMIEN, 25150 ECOT (FR); TROPEE, NICOLAS, 90000 BELFORT (FR); MAGAS, MIHAELA MARIA, 90800 ARGIESANS (FR); THOR, TOU, 25150 PONT DE ROIDE VERMONDANS (FR); MAURICE, SEBASTIEN, 25360 GONSANS (FR); BORNIER, PAUL, 70400 LUZE (FR)
(74) Mandataire: BCIP

(57) **Abrégé**

L'invention concerne une doublure (1) de custode conçue pour équiper une caisse (2) de véhicule automobile, la doublure (1) de custode présentant une première portion (6) conçue pour s'étendre le long d'au moins une partie d'un pied arrière (3) délimitant une custode (7), la doublure (1) de custode présentant une deuxième portion (8), inclinée par rapport à la première portion (6), conçue pour s'étendre en regard d'un renfort (5) de support de custode fixé à la caisse (2), s'étendant entre un arceau de pavillon (4) de la caisse (2) et le pied arrière (3), la deuxième portion (8) étant conçue pour former un corps creux (9) avec le renfort (5) de support de custode et le pied arrière (3) lorsque la première portion (6) de la doublure (1) est fixée sur la caisse (2). L'invention concerne également une caisse (2) équipée d'une telle doublure (1).

## Description

Le domaine technique concerne les doublures de custode, les caisses de véhicule automobile présentant de telles doublures de custode et les véhicules automobiles présentant une telle caisse.

En matière de sécurité routière, les constructeurs automobiles doivent répondre à plusieurs préoccupations majeures qui imposent des contraintes spécifiques lors du développement de nouveaux véhicules. Ainsi, il est essentiel d'assurer la sécurité des passagers lors d'une collision, quelle que soit la vitesse, tout en permettant de maîtriser les coûts de réparation des véhicules après des chocs urbains.

Le comportement des véhicules automobiles face à ces enjeux est réglementé et évalué à l'aide de procédures de tests normalisées. Ces exigences, de plus en plus nombreuses et rigoureuses, contraignent les constructeurs à innover en permanence pour s'y conformer. Les procédures de tests sont, par exemple, décrites par l'organisme international Euro NCAP.

Parmi les nombreuses situations d'accidents étudiées, les tests visant à évaluer le comportement des véhicules lors de chocs latéraux occupent une place importante.

Traditionnellement, afin d'assurer une liaison structurelle entre l'arc de pavillon, le pied arrière et la traverse arrière, les constructeurs utilisent des raidisseurs. Ces derniers permettent une liaison mécanique mais s'avèrent insuffisants pour offrir une protection renforcée en cas de choc latéral. Ainsi, des renforts supplémentaires, comme ceux des supports de custode, ont été intégrés. Cependant, l'essor des véhicules électriques, avec leur masse significativement accrue, rend indispensable un renforcement supplémentaire de cette zone pour éviter tout risque d'effondrement du pied arrière.

De plus, pour les véhicules à assiette basse, tels que les berlines ou les sportives, les sollicitations appliquées aux portes et, par conséquent, aux pieds arrière, sont considérablement accrues. Cette configuration augmente les risques de déformation en cas de collision latérale ou arrière. En particulier, les retours d'expérience montrent qu'en cas de choc latéral, le pied arrière subit souvent un effondrement, entraînant une rotation du longeron associé. Cette déformation compromet non seulement l'intégrité structurelle du véhicule, mais également la sécurité des occupants.

Ainsi, il existe un besoin d'une solution permettant de renforcer la résistance du pied arrière d'un véhicule automobile en cas de choc latéral.

La présente invention a pour objet de pallier les problèmes exposés précédemment. Dans ce contexte technique, un but de la présente invention est de fournir une doublure de custode permettent de renforcer, en coopérant avec un renfort de support de custode, le pied arrière.

A cet effet, la présente invention se rapporte à une doublure de custode conçue pour équiper une caisse de véhicule automobile, la doublure de custode présentant une première portion conçue pour s'étendre le long d'au moins une partie d'un pied arrière délimitant une custode, la doublure de custode présentant une deuxième portion, inclinée par rapport à la première portion, conçue pour s'étendre en regard d'un renfort de support de custode fixé à la caisse, s'étendant entre un arceau de pavillon de la caisse et le pied arrière, la deuxième portion étant conçue pour former un corps creux avec le renfort de support de custode et le pied arrière lorsque la première portion de la doublure est fixée sur la caisse.

L'invention concerne également une caisse de véhicule automobile comprenant un pied arrière, délimitant au moins en partie une custode, et un renfort de support de custode s'étendant entre un arceau de pavillon de la caisse et le pied arrière, la caisse comprenant en outre une doublure de custode selon l'invention, la première portion s'étendant le long d'une partie du pied arrière, la deuxième portion s'étendant en regard du renfort de support de custode en formant un corps creux avec ce dernier.

L'invention concerne enfin un véhicule automobile présentant une caisse selon l'invention.

Ainsi, la doublure de custode selon l'invention permet de renforcer le pied arrière en coopérant avec le renfort de support de custode pour former un corps creux. L'expérience montre en effet que le corps creux ainsi créé permet de raidir considérablement le pied arrière et permet d'empêcher sa rotation. La doublure de custode selon l'invention permet ainsi d'améliorer le comportement du véhicule automobile selon l'invention sans augmentation de la masse du véhicule.

Selon un mode de réalisation de la deuxième portion s'étend entre la première portion et un bord tombé conformé pour renforcer le corps creux.

Selon une possibilité de la doublure, la première portion vient de matière avec la deuxième portion.

Selon un mode de réalisation, les première et deuxième portions s'étendent suivant deux plans sensiblement perpendiculaires.

Selon une possibilité de la doublure de custode, la doublure est formée d'une tôle emboutie.

Selon une possibilité de la caisse, le renfort de support de custode forme un corps creux avec le pied arrière.

L'invention sera mieux comprise à la lecture de la description détaillée qui va suivre, donnée uniquement à titre d'exemple non limitatif et faite en se référant aux dessins annexés sur lesquels :

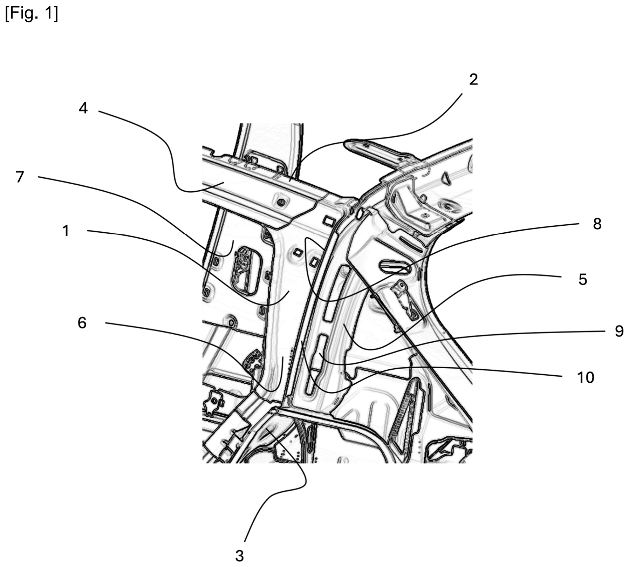

[Fig. 1] la figure 1 représente une vue en perspective d'une caisse de véhicule automobile selon l'invention représentée depuis l'arrière du pied arrière ;

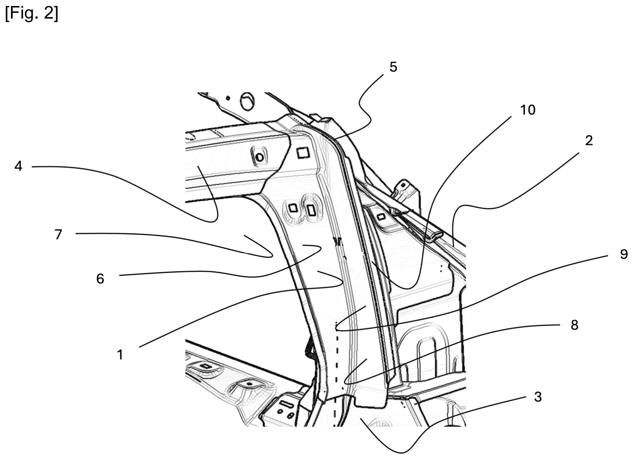

[Fig. 2] la figure 2 représente une vue en perspective d'une caisse de véhicule automobile selon l'invention représentée depuis l'avant du pied arrière ;

Dans ces figures, les mêmes références sont utilisées pour désigner les mêmes éléments.

Une doublure 1 de custode selon l'invention, illustrée sur les figures, est conçue pour équiper une caisse 2 de véhicule automobile selon l'invention, illustrée sur les figures.

La caisse 2 comporte, de manière classique, un pied arrière 3 et un arceau de pavillon 4. La caisse 2 comporte également un renfort 5 de support de custode reliant l'arceau de pavillon 4 et le pied arrière 3 pour raidir la caisse 2.

La doublure 1 de custode présente une première portion 6 conçue pour s'étendre le long d'au moins une partie du pied arrière 3 délimitant une custode 7.

La doublure 1 de custode présente également une deuxième portion 8, inclinée par rapport à la première portion 6, conçue pour s'étendre en regard du renfort 5 de support de custode fixé à la caisse 2. La deuxième portion 8 est conçue pour former un corps creux 9 avec le renfort 5 de support de custode et le pied arrière 3, lorsque la première portion 6 de la doublure 1 de custode est fixée sur la caisse 2.

Dans l'exemple illustré sur les figures, la première portion 6 vient de matière avec la deuxième portion 8. Avantageusement, la doublure 1 de custode est formée d'une tôle emboutie.

Dans l'exemple illustré sur les figures, les première 6 et deuxième 8 portions s'étendent suivant deux plans sensiblement perpendiculaires. A titre d'exemple, la deuxième portion 8 s'étend sur une distance comprise entre 45 et 65 mm, de préférence de l'ordre de 56 mm.

Dans le mode de réalisation illustré sur les figures, la deuxième portion 8 s'étend entre la première portion 6 et un bord tombé 10 conformé pour renforcer le corps creux 9. En l'occurrence, le bord tombé 10 est conformé de sorte à s'étendre vers l'arrière de la caisse 2, lorsque la doublure 1 de custode est montée sur la caisse 2.

Sur la caisse 2 selon l'invention, la doublure 1 de custode est fixée de sorte que la première portion 6 s'étend au moins en partie sur le pied arrière 3 en suivant le pourtour de la custode 7. La doublure 1 de custode est également fixée de sorte que la deuxième portion 8 forme le corps creux 9 avec le renfort 5 de support de custode. Avantageusement, le corps creux 9 est également délimité par le pied arrière 3. Enfin, selon une possibilité, le renfort 5 de support de custode forme également un corps creux 9 avec le pied arrière 3.

Ainsi, la doublure 1 de custode selon l'invention permet de renforcer le pied arrière 3 en coopérant avec le renfort 5 de support de custode pour former un corps creux 9. L'expérience montre en effet que le corps creux 9 ainsi créé permet de raidir considérablement le pied arrière 3 et permet d'empêcher sa rotation. La doublure 1 de custode selon l'invention permet ainsi d'améliorer le comportement du véhicule sans augmentation de sa masse.

L'invention ne se limite pas au mode de réalisation de la doublure de custode décrit ci-avant, seulement à titre d'exemple, mais d'autres modes de réalisation peuvent être conçus par l'homme de métier sans sortir du cadre et de la portée de la présente invention.

## Revendications

1. Doublure (1) de custode conçue pour équiper une caisse (2) de véhicule automobile, la doublure (1) de custode présentant une première portion (6) conçue pour s'étendre le long d'au moins une partie d'un pied arrière (3) délimitant une custode (7), la doublure (1) de custode présentant une deuxième portion (8), inclinée par rapport à la première portion (6), conçue pour s'étendre en regard d'un renfort (5) de support de custode fixé à la caisse (2), s'étendant entre un arceau de pavillon (4) de la caisse (2) et le pied arrière (3), la deuxième portion (8) étant conçue pour former un corps creux (9) avec le renfort (5) de support de custode et le pied arrière (3) lorsque la première portion (6) de la doublure (1) est fixée sur la caisse (2).

2. Doublure (1) de custode selon la revendication 1, **caractérisée en ce que** la deuxième portion (8) s'étend entre la première (6) et un bord tombé (10) conformé pour renforcer le corps creux (9).

3. Doublure (1) de custode selon la revendication 1 ou 2, **caractérisée en ce que** la première portion (6) vient de matière avec la deuxième portion (8).

4. Doublure (1) de custode selon les revendications 1 à 3, **caractérisée en ce que** les première (6) et deuxième (8) portions s'étendent suivant deux plans sensiblement perpendiculaires.

5. Doublure (1) de custode selon l'une des revendications 1 à 4, **caractérisée en ce que** la doublure (1) est formée d'une tôle emboutie.

6. Caisse (2) de véhicule automobile comprenant un pied arrière (3), délimitant au moins en partie une custode (7), et un renfort (5) de support de custode s'étendant entre un arceau de pavillon (4) de la caisse (2) et le pied arrière (3), la caisse (2) comprenant en outre une doublure (1) de custode selon l'une des revendications 1 à 5, la première portion (6) s'étendant le long d'une partie du pied arrière (3), la deuxième portion (8) s'étendant en regard du renfort (5) de support de custode en formant un corps creux (9) avec ce dernier.

7. Caisse (2) de véhicule automobile selon la revendication 6, **caractérisée en ce que** le renfort (5) de support de custode forme un corps creux (9) avec le pied arrière (3).

8. Véhicule automobile présentant une caisse selon la revendication 6 ou 7.
